Europäisches Patentamt

European Patent Office    (11) Numéro de publication: **0 032 088**

Office européen des brevets    **B1**

(19)

(12)    **FASCICULE DE BREVET EUROPEEN**

(45) Date de publication du fascicule du brevet: **13.04.83**    (51) Int. Cl.³: **F 22 B 37/32,** B 01 D 45/16

(21) Numéro de dépôt: **80401826.5**

(22) Date de dépôt: **18.12.80**

(54) **Dispositif de séparation des phases liquide et vapeur d'un fluide et générateur de vapeur comprenant des dispositifs de ce type.**

(30) Priorité: **04.01.80 FR 8000125**

(43) Date de publication de la demande:
**15.07.81 Bulletin 81/28**

(45) Mention de la délivrance du brevet:
**13.04.83 Bulletin 83/15**

(84) Etats contractants désignés:
**BE CH DE GB IT LI NL SE**

(56) Documents cités:
**DE - C - 115 052**
**DE - C - 931 170**
**FR - A - 1 340 881**
**FR - A - 2 275 731**
**GB - A - 1 298 879**
**US - A - 4 014 673**

(73) Titulaire: **COMMISSARIAT A L'ENERGIE ATOMIQUE Etablissement de Caractère Scientifique Technique et Industriel B.P. 510 F-75752 Paris Cedex 15 (FR)**

(72) Inventeur: **Chaix, Jean Edmond Le Colombier Villa "L" F-04100 Manosque (FR)**
Inventeur: **Fajeau, Maurice 512, Chemin du Saint Sépulcre F-84120 Pertuis (FR)**
Inventeur: **Ouzeau, Jean François Le Clos Royal - Bt.C Boulevard des Pas Enchantés F-44230 Saint Sebastien sur Loire (FR)**

(74) Mandataire: **Mongrédien, André et al, c/o BREVATOME 25, rue de Ponthieu F-75008 Paris (FR)**

Courier Press, Leamington Spa, England.

Dispositif de séparation des phases liquide et vapeur d'un fluide et générateur de vapeur comprenant des dispositifs de ce type

La présente invention concerne un dispositif destiné à séparer les phases liquide et vapeur d'un fluide et l'application d'un tel dispositif à l'abaissement du taux d'humidité de la vapeur d'eau sortant d'un générateur de vapeur.

Dans un fluide en phase vapeur, il se trouve généralement une certaine quantité du même fluide en phase liquide. Pour de nombreuses applications, le pourcentage du fluide en phase liquide admissible est très sensiblement inférieur au pourcentage existant et il est alors nécessaire de faire passer le fluide par un dispositif de séparation approprié qui laisse passer le fluide en phase vapeur tout en retenant la majeure partie du même fluide en phase liquide véhiculé par la vapeur.

Ainsi, par exemple, les générateurs de vapeur dans lesquels un fluide caloporteur primaire échauffe de l'eau circulant dans un circuit secondaire pour amener celle-ci à l'état de vapeur produisent généralement de la vapeur saturée ayant une teneur en humidité relativement élevée. Ceci est notamment le cas lorsque le fluide primaire circule dans des tubes en U noyés dans l'eau à l'intérieur du générateur. Dans ce type de générateur de vapeur, le taux d'humidité de la vapeur produite varie de 20% à 80% en poids selon les conditions de fonctionnement et d'exploitation. Ce taux d'humidité n'est pas compatible avec le taux d'humidité maximal admissible dans les turbo-machines qu'actionne généralement la vapeur sortant des générateurs de vapeur. En effet, la vapeur actionnant les turbo-machines ne doit pas contenir plus de 0,25% de liquide. Il est donc nécessaire d'effectuer une séparation des phases liquide et vapeur aussi complète que possible avant que la vapeur ne parvienne aux turbo-machines. Cette séparation est généralement réalisée à l'intérieur même des générateurs de vapeur et, plus précisément, dans le dôme supérieur de ceux-ci.

On connaît à ce jour un grand nombre de dispositifs de séparation qui sont disposés dans le dôme supérieur des générateurs de vapeur. Ces dispositifs connus fonctionnent généralement suivant le principe du cyclone, par gravité, ou au moyen de labyrinthes et de goulottes de retenue. Cependant, ils présentent tous l'inconvénient, soit d'être d'une efficacité relativement faible qui nécessite la mise en série d'un nombre important de ces dispositifs de séparation dans le dôme supérieur du générateur, soit d'avoir une perte de charge importante qui diminue le taux de recirculation, soit de présenter un encombrement unitaire tel qu'ils occupent un volume important dans le générateur. Dans les trois cas, l'encombrement total du ou des dispositifs de séparation à l'intérieur du générateur de vapeur est très important et conduit à augmenter sensiblement la hauteur totale du générateur de vapeur par rapport à la hauteur occupée par l'échangeur de chaleur proprement dit.

La présente invention a donc pour objet la réalisation d'un dispositif de séparation des phases liquide et vapeur d'un fluide que soit d'encombrement et de pertes de charge faibles et d'efficacité importante afin de pouvoir être utilisé dans un générateur de vapeur sans accroître de façon disproportionnée la hauteur totale de celui-ci.

L'invention a également pour objet la réalisation d'un dispositif de séparation qui soit de construction simple et qui puisse être utilisé en dehors d'un générateur de vapeur.

A cet effet, un dispositif de séparation des phases liquide et vapeur d'un fluide comprenant une paroi cylindrique dans laquelle sont disposées des ailettes est caractérisé conformément à l'invention par le fait que chaque ailette se présente sous la forme d'une surface triangulaire curviligne dont un premier côté jointif avec la paroi définit une hélice d'axe confondu avec l'axe de la paroi, dont le sommet opposé à ce premier côté est disposé sensiblement dans l'axe de la paroi et assemblé de façon étanche aux sommets correspondants des autres ailettes, et dont les autres côtés définissent un bord d'attaque sensiblement perpendiculaire à l'axe de la paroi et un bord de fuite incliné par rapport à cet axe.

Grâce à cette configuration particulière des ailettes du dispositif de séparation selon l'invention, ce dispositif présente une grande efficacité pour un encombrement limité. Ainsi, l'utilisation de deux dispositifs de ce type superposés dans le dôme d'un générateur de vapeur permet dans la plupart des cas d'obtenir une vapeur directement utilisable dans les turbo-machines.

Conformément à un mode de réalisation préféré de l'invention, l'angle d'inclinaison du bord de fuite par rapport à l'axe de la paroi est compris entre 30° et 60°.

Selon une autre caractéristique de l'invention, le bord de fuite de chaque ailette est courbe et définit avec la droite joignant les sommets correspondants une surface cylindrique incurvée dans le sens de l'hélice définie par le premier côté.

Selon une première variante de l'invention, le bord d'attaque de chaque ailette est rectiligne.

Selon une deuxième variante de l'invention, chaque ailette comprend du côté du bord d'attaque un prolongement tronconique incurvé dans le sens de l'hélice définie par le premier côté, le rayon de courbure de ce prolongement allant en augmentant vers la paroi cylindrique.

De préférence, l'évacuation du fluide en phase liquide qui se trouve retenu dans le dispositif s'effectue au moyen d'une coiffe annulaire disposée dans le prolongement de la paroi cylindrique du côté de la sortie du fluide et

d'une jupe cylindrique de diamètre supérieur au diamètre de la paroi prolongeant le coiffe annulaire, le diamètre interne de cette dernière étant par ailleurs inférieur au diamètre de la paroi.

L'invention s'applique en particulier à un générateur de vapeur du type comprenant une enveloppe externe, un premier circuit dans lequel circule un fluide primaire chaud et un second circuit dans lequel circule un fluide secondaire, ce dernier pénétrant dans ladite enveloppe à l'état liquide et en ressortant en l'état de vapeur après avoir emmagasiné une partie des calories véhiculées par le fluide primaire, le second circuit comprenant de plus des moyens de séparation des phases liquide et vapeur du fluide secondaire disposés à proximité de la sortie de l'enveloppe. Selon l'invention, ce générateur est caractérisé en ce que les moyens de séparation comprennent au moins un groupe de deux dispositifs de séparation raccordés en série. De préférence, la paroi du second dispositif de séparation est alors raccordée de façon étanche à la coiffe du premier dispositif de séparation.

Pour une bonne marche du générateur, le second circuit comprend un chambre supérieure dans laquelle débouche le second dispositif de séparation et une chambre dans laquelle débouchent les passages définis entre la paroi de chaque dispositif de séparation et la jupe cylindrique correspondante, les chambres communiquant par des moyens de séchage à faible perte de charge.

Conformément à un mode de réalisation préfére de l'invention, chaque ailette du premier dispositif de séparation comprend du côté du bord d'attaque un prolongement tronconique incurvé dans le sens de l'hélice définie par le premier côté, le rayon de courbure de ce prolongement allant en augmentant vers la paroi cylindrique correspondante, et le bord d'attaque de chaque ailette du second dispositif de séparation est rectiligne.

On décrira maintenant, à titre d'exemple non limitatif, un mode de réalisation particulier de l'invention en se référant aux dessins annexés dans lesquels:
— la figure 1 est une vue en coupe axiale qui représente schématiquement la partie supérieure d'un générateur de vapeur comprenant des dispositifs de séparation réalisés conformément à l'invention.
— la figure 2 est une vue de côté montrant la forme et la disposition des ailettes du dispositif de séparation supérieur de chacun des groupes de séparateurs du générateur de vapeur représenté sur la figure 1 et un rabattement de l'une des ailettes de ce dispositif,
— la figure 3 est une vue semblable à la figure 2 montrant de côté et en rabattement la forme et la disposition des ailettes du dispositif de séparation inférieur de chaque groupe de séparateurs représenté sur la figure 1, et
— la figure 4 est une vue en perspective montrant la forme et la répartition des ailettes dans le dispositif de séparation inférieur représenté sur la figure 3.

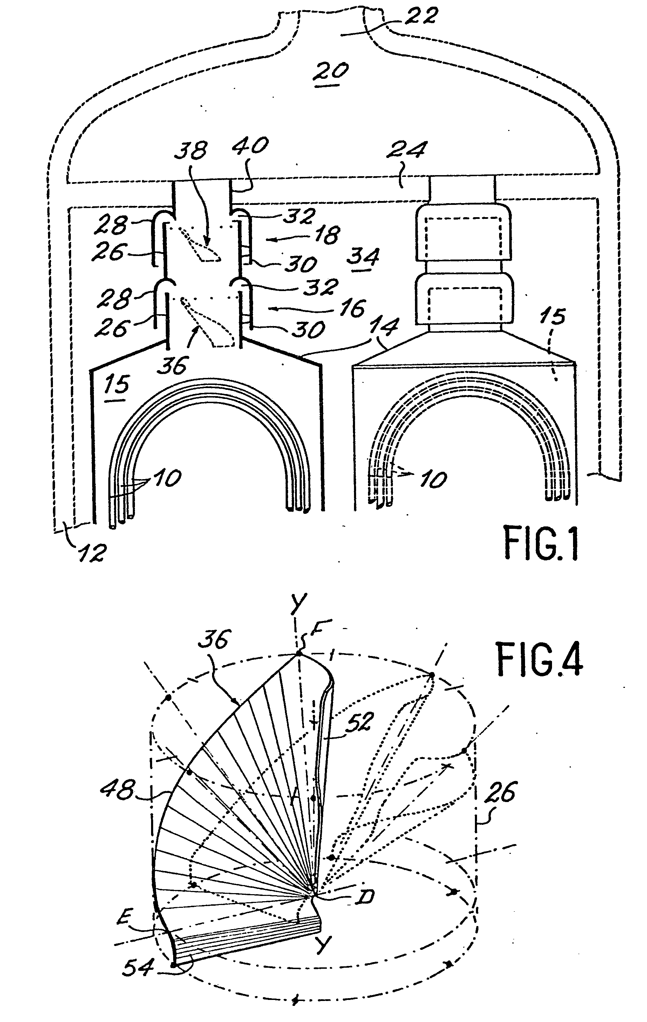

Le générateur de vapeur dont la partie haute est représentée sur la figure 1 est un générateur d'un type connu dans lequel le fluide primaire chaud circule dans un faisceau de tubes en U (10) pour transmettre à un fluide secondaire généralement constitué par de l'eau les calories qu'il véhicule. Le générateur comprend une enveloppe externe 12, cylindrique et d'axe vertical, une cloison étanche 14 entourant le faisceau de tube 10 à l'intérieur de l'enveloppe 12, et un groupe de deux dipositifs de séparation superposés 16 et 18 associé au faisceau de tube 10 pour mettre en communication la chambre 15 définie à l'intérieur de la paroi étanche 14 correspondant avec une chambre 20 formée à la partie supérieure de l'enveloppe 12. La chambre 20 est munie d'un orifice de sortie 22 prévu pour être raccordé à un circuit d'utilisation (non représenté). Comme l'illustre la figure 1, la chambre supérieure 20 est séparée d'une chambre 34 dans laquelle sont reçus les dispositifs de séparation 16 et 18 par un système de séchage 24, p. ex. une paroi poreuse.

Grâce à cette disposition, lorsqu'un fluide primaire chaude circule dans le faisceau de tubes 10 et lorsqu'un fluide secondaire pénètre par le bas dans la chambre 15, ce fluide secondaire se vaporise avant de pénétrer dans la chambre 20 en traversant successivement les dispositifs de séparation 16 et 18 qui permettent d'abaisser la teneur en humidité de la vapeur pénétrant dans la chambre 20 à une valeur convenable. La vapeur sortant de la chambre 20 par l'orifice 22 est ensuite acheminée dans le circuit d'utilisation (non représenté) qui comprend généralement des turbo-machines ayant pour effet de transformer l'énergie calorifique véhiculée par la vapeur en énergie mécanique.

Conformément à l'invention, chacun des séparateurs 16 et 18 comprend une paroi cylindrique étanche 26, d'axe vertical, une coiffe annulaire 28 disposée dans le prolongement de cette paroi cylindrique du côté de la sortie du fluide, c'est-à-dire audessus de cette paroi dans le mode de réalisation représenté, et une jupe cylindrique 30 prolongeant vers le bas la coiffe annulaire 28. Le diamètre interne de la coiffe 28 est inférieur au diamètre de la paroi 26 et le diamètre externe de la coiffe 28 ainsi que le diamètre de la jupe 30 sont supérieurs au diamètre de la paroi 26, de tell sorte que la coiffe et la jupe cylindrique définissent un passage annulaire 32 par lequel le fluide en phase liquide est acheminé dans la chambre 34 définie à l'intérieur de l'enveloppe 12 entre la paroi poreuse 24 et les cloisons étanches 14.

La séparation des phases liquide et vapeur du fluide secondaire circulant au travers des dispositifs de séparation 16 et 18 est réalisée au moyen d'ailettes 36 et 38 créant un effet de centrifugation à l'intérieur de chaque dispositif.

Comme l'illustre la figure 1, la paroi cylindrique 26 de chaque dispositif de séparation inférieur 16 est raccordée de façon étanche à la cloison 14 correspondante. De même, la paroi cylindrique 26 du dispositif de séparation supérieur 18 est raccordée de façon étanche à la coiffe 28 du dispositif de séparation inférieur 16. Enfin, la coiffe 28 du dispositif de séparation supérieur 18 est raccordée de façon étanche à un conduit 40 traversant la cloison poreuse 24. Enfin, comme l'illustre la figure 1, les dispositifs de séparation 16 et 18 sont disposés de façon coaxiale et les dimensions des parois 26 et des coiffes 28 sont sensiblement les mêmes.

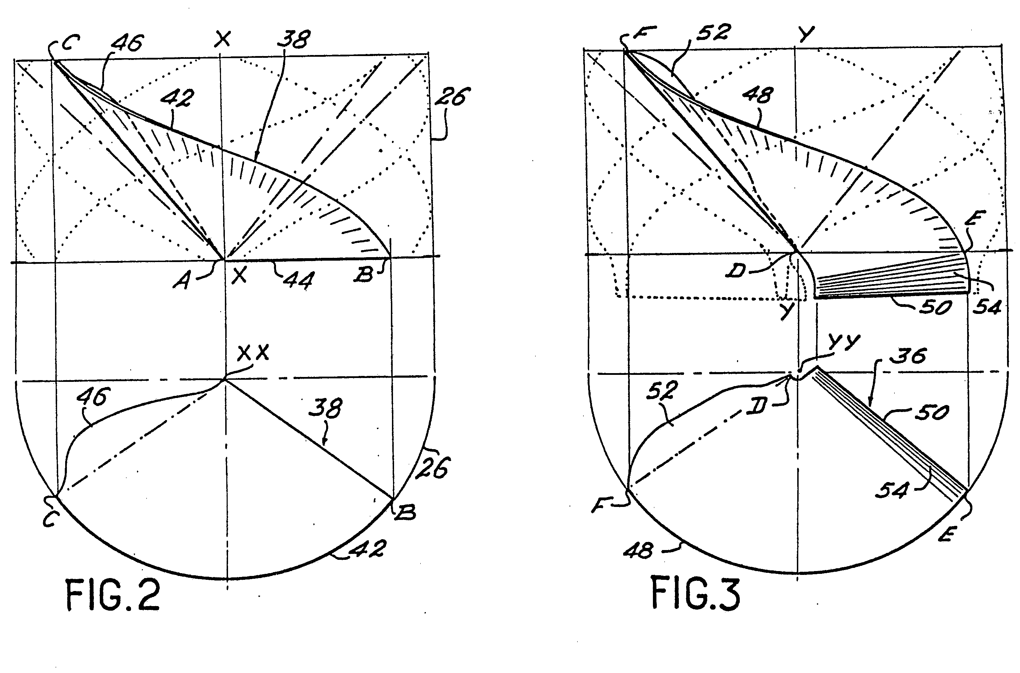

Les formes particulières des ailettes 36 et 38 ainsi que leur disposition à l'intérieur des dispositifs de séparation correspondants 16 et 18 seront maintenant décrites en se référant aux figures 2 à 4.

Dans chacun des dispositifs de séparation 16 et 18 sont disposées six ailettes 36 et 38 régulièrement réparties à l'intérieur de la paroi cylindrique 26.

Dans le but de simplifier l'exposé, nous commencerons par décrire en nous référant à la figure 2, les ailettes 38 du dispositif de séparation supérieur 18, dont la forme est plus simple que cell des ailettes 36 du dispositif de séparation inférieur 16.

Chacune des ailettes 38 se présente sous la forme d'une surface triangulaire curviligne dont un premier côté 42, jointif avec la paroi 26 correspondante, définit une hélice d'axe confondu avec l'axe X—X de cette dernière. Le sommet A de ce triangle curviligne opposé au côté 42 est disposé sensiblement dans l'axe X—X. Conformément à l'invention, les six ailettes 38 sont assemblées entre elles de façon étanche par leur sommet A, par exemple par soudure, de telle sorte qu'aucun passage direct du fluide secondaire n'est possible au traverse du dispositif de séparation 18 correspondant. Les deux autres côtés AB et AC du triangle curviligne 38 définissent respectivement un bord d'attaque 44 sensiblement perpendiculaire à l'axe X—X de la paroi 26 et disposé à l'extrémité inférieure de celle-ci et un bord de fuite 46 incliné par rapport à l'axe X—X selon un angle compris de préférence entre 30° et 60°, cet angle ayant une valeur sensiblement égale à 45° dans le mode de réalisation représenté sur la figure 2. Le bord d'attaque 44 de chaque ailette 38 est de préférence rectiligne alors que le bord de fuite 46 est courbe et définit avec la droite AC joignant les sommets correspondants du triangle curviligne défini par l'ailette, une surface cylindrique incurvée dans le sens de l'hélice définie par le côté 42, c'est-à-dire vers le haut en considérant la vue de côté de la figure 2. De préférence, chacune des ailettes 38 est développable, c'est-à-dire que les génératrices des ailettes passant par le sommet A et par le côté 42 sont rectilignes. De plus, le bord de fuite 46 de chaque ailette est de préférence biseauté.

Comme le montrent les figures 3 et 4, les ailettes 36 du dispositif de séparation inférieur 16 sont disposées de la même manière que les ailettes 38 du dispositif de séparation 18, c'est-à-dire qu'elles sont au nombre de six régulièrement réparties à l'intérieur de la paroi cylindrique 26.

De plus, la forme des ailettes 36 est voisine de la forme des ailettes 38. En effet, chaque ailette 36 se présente sous la forme d'une surface triangulaire curviligne dont un côté 48, jointif avec la paroi 26, définit une hélice d'axe confondu avec l'axe Y—Y de cette paroi. De même, le sommet D du triangle curviligne défini par chaque ailette opposé au côté 48 est disposé sensiblement dans l'axe Y—Y. Comme pour le dispositif de séparation supérieur 18, les ailettes 36 sont soudées entre elles au niveau du sommet D, comme l'illustre la figure 3. Les deux autres côtés DE et DF du triangle curviligne défini par chacune des ailettes 48 constituent un bord d'attaque 50 et un bord de fuite 52. Le bord de fuite 52 est courbe et biseauté de la même manière que le bord de fuite 46 de chacune des ailettes 38. Cependant, les ailettes 36 se distinguent des ailettes 38 par leur bord d'attaque 50. En effet, chaque ailette 36 comprend du côté du bord d'attaque 50 un prolongement tronconique 54 d'axe sensiblement normal à l'axe Y—Y. Ce prolongement 54 est incurvé dans le sens de l'hélice formée par le côté 48, c'est-à-dire vers le bas en considérant la figure 4 et la vue de côté de la figure 3. Comme le montrent les figures 3 et 4, le rayon de courbure du prolongement tronconique 54 va en augmentant de l'axe Y—Y vers la paroi cylindrique 26.

De même que pour les ailettes 38, chacune des ailettes 36 est développable.

Le fonctionnement du générateur de vapeur qui vient d'être décrit en se référant aux figures 1 à 4 est le suivant.

En raison de l'échange de chaleur entre le fluide primaire et le fluide secondaire au niveau des tubes en U 10 dans lesquels circule le fluide primaire, ie fluide secondaire se vaporise dans la chambre 15 définie à l'intérieur de la cloison cylindrique étanche 14. Le fluide secondaire en phase vapeur présente au niveau supérieur de la chambre 15 une teneur en humidité relativement élevée comprise entre 20% et 80% en poids. Il traverse alors successivement les dispositifs de séparation 16 et 18 avant de pénétrer par les conduits 40 à l'intérieur de la chambre supérieure 20, d'où la vapeur asséchée est évacuée par l'orifice de sortie 22 vers les circuits d'utilisation (non représentés).

La vapeur qui pénètre par l'extrémité inférieure de chacun des dispositifs de séparation 16 et 18 est centrifugée par les ailettes hélicoïdales 36 et 38, de telle sorte que le fluide secondaire en phase liquide se dépose sur la face interne de la paroi cylindrique 26 avant d'être acheminée par les passages 32 dans la chambre 34. La teneur en humidité de la vapeur sortant des chambres définies à l'intérieur de la cloison 14 est ainsi réduite par chacun des dispositifs de séparation 16 et 18, de telle sorte que la teneur en humidité de la vapeur contenue dans la chambre 20 est inférieure à 0,25% en poids.

Une faible partie de la vapeur peut parvenir par des passages 32 dans la chambre 34. Le fluide en phase vapeur parvenant dans la chambre 34 est alors récupéré après avoir traversé le système de séchage 24 retenant en partie ou en totalité les gouttelettes de liquide sans engendrer de pertes de charge importantes sur l'écoulement vapeur. À titre d'exemple, ce système 24 peut être constitué par une cloison poreuse réalisée à partir d'un produit existant dans le commerce sous la marque "KNIT". Le séchage peut aussi être réalisé par simple gravité ou par tout autre système de séchage (sécheur à choc, à labyrinthe, etc...).

Il résulte de ce qui précède que le rendement des dispositifs de séparation 16 et 18 réalisé conformément à l'invention est suffisamment élevé pour permettre à un groupe de deux séparateurs montés en série de réduire le taux d'humidité de la vapeur sortant du générateur de vapeur à un niveau acceptable. L'encombrement du générateur de vapeur dans son ensemble s'en trouve sensiblement réduit par rapport à l'encombrement des générateurs de vapeur munis de dispositifs de séparation de la technique antérieure.

Bien entendu, l'invention n'est pas limitée au mode de réalisation qui vient d'être décrit à titre d'exemple, mais en couvre toutes les variantes. Ainsi, on comprendra que les dispositifs de séparation des phases liquide et gazeuse d'un liquide réalisés conformément à l'invention peuvent être utilisés toutes les fois qu'il est nécessaire de procéder à une telle séparation et ne sont pas limités à l'application à un générateur de vapeur qui vient d'être décrite.

**Revendications**

1. Dispositif de séparation des phases liquide et vapeur d'un fluide, comprenant une paroi cylindrique (26) dans laquelle sont disposées des ailettes (36, 38), caractérisé en ce que chacune des ailettes se présente sous la forme d'une surface triangulaire curviligne (ABC, DEF) dont un premier côté (42, 48) jointif avec la paroi (26) définit une hélice d'axe confondu avec l'axe (XX, YY) de la paroi, dont le sommet (A, D) opposé à ce premier côté est disposé sensiblement dans l'axe de la paroi et assemblé de façon étanche aux sommets correspondants des autres ailettes, et dont les deux autres côtés définissent un bord d'attaque (44, 50) sensiblement perpendiculaire à l'axe (XX, YY) de la paroi et un bord de fuite (46, 52) incliné par rapport à cet axe.

2. Dispositif selon la revendication 1, caractérisé, en ce que l'angle d'inclinaison du bord de fuite (46, 52) par rapport à l'axe (XX, YY) de la paroi est compris entre 30° et 60°.

3. Dispositif selon l'une quelconque des revendications 1 ou 2, caractérisé en ce que le bord de fuite (46, 52) de chaque ailette est courbe et définit avec la droite (AC, DF) joignant les sommets correspondants une surface cylindrique incurvée dans le sens de l'hélice définie par le premier côté (42, 48).

4. Dispositif selon l'une quelconque des revendications 1 à 3, caractérisé en ce que le bord d'attaque (44) de chaque ailette est rectiligne.

5. Dispositif selon l'une quelconque des revendications 1 à 3, caractérisé en ce que chaque ailette (36) comprend du côté du bord d'attaque (50) un prolongement tronconique (54) incurvé dans le sens de l'hélice définie par le premier côté (48), le rayon de courbure de ce prolongement allant en augmentant vers la paroi cylindrique (26).

6. Dispositif selon l'une quelconque des revendications précédentes, caractérisé en ce que le bord de fuite (46, 52) de chaque ailette est biseauté.

7. Dispositif selon l'une quelconque des revendications précédentes, caractérisé en ce que chaque ailette (36, 38) est développable.

8. Dispositif selon l'une quelconque des revendications précédentes, caractérisé en ce qu'il comprend de plus une coiffe annulaire (28) disposée dans le prolongement de la paroi cylindrique (26) du côté de la sortie du fluide et une jupe cylindrique (30) de diamètre supérieur au diamètre de la paroi prolongeant la coiffe annulaire (28), le diamètre interne de cette dernière étant inférieur au diamètre de la paroi (26).

9. Dispositif selon l'une quelconque des revendications précédentes, caractérisé en ce que l'axe (XX, YY) de la paroi (26) est vertical et en ce que l'entrée du fluide se fait par le bas.

10. Générateur de vapeur comprenant une enveloppe externe (12), un premier circuit dans lequel circule un fluide primaire chaud et un second circuit dans lequel circule un fluide secondaire, ce dernier pénétrant dans ladite enveloppe à l'état liquide et en ressortant à l'état de vapeur après avoir emmagasiné une partie des calories véhiculées par le fluide primaire, le second circuit comprenant de plus des moyens de séparation des phases liquide et vapeur de fluide secondaire disposés à proximité de la sortie de l'enveloppe, caractérisé en ce que les moyens de séparation comprennent au moins un groupe de deux dispositifs de séparation (16, 18) selon l'une quelconque des revendications précédentes raccordés en série.

11. Générateur de vapeur selon la revendication 10, caractérisé en ce que les dispositifs de séparations (16, 18) sont réalisés selon les revendications 8 et 9 prises en combinaison, et en ce que la paroi (26) du second dispositif de séparation (18) est raccordée de façon étanche à la coiffe (28) du premier dispositif de séparation (16).

12. Générateur selon la revendication 11, caractérisé en ce que le second circuit comprend une chambre supérieure (20) dans laquelle débouche le second dispositif de séparation (18) et une chambre (34) dans laquelle débouchent les passages définis entre la paroi (26) de chaque dispositif de séparation (16, 18) et la jupe cylindrique (30) correspondante, les chambres (34 et 20) communiquant par des moyens de séchage (24) à faible perte de charge.

13. Générateur selon l'une quelconque des revendications 10 à 12, caractérisé en ce que chaque ailette (36) du premier dispositif de séparation (16) comprend du côté du bord d'attaque (50) un prolongement tronconique (54) incurvé dans le sens de l'hélice définie par le premier côté (48), le rayon de courbure de ce prolongement allant en augmentant vers la paroi cylindrique (26) correspondante, alors que le bord d'attaque (44) de chaque ailette (38) du second dispositif de séparation (18) est rectiligne.

## Claims

1. Apparatus for separating liquid and vapour phases of a fluid, comprising a cylindrical wall (26) located within which are vanes (36, 38), characterized in that each of the vanes has the form of a curved triangle (ABC, DEF) of which a first side (42, 48), joined to the wall (26), defines a helix whose axis is the same as the axis (XX, YY) of the wall, whose apex opposite said first side is located substantially on the axis of said wall and is in fluid tight contact with the corresponding apices of the other vanes, and whose two remaining sides constitute a leading edge (44, 50) substantially perpendicular to the axis (XX, YY) of the wall, and a trailing edge (46, 52) inclined with respect to this axis.

2. Apparatus according to Claim 1 characterized in that the trailing edge (46, 52) has an angle of inclination of between 30 and 60° with respect to the axis (XX, YY) of the wall.

3. Apparatus according to either of Claims 1 and 2 characterized in that the trailing edge (46, 52) of each vane is curved and defined, with the straight line (AC, DF) joining the corresponding apices a cylindrical surface incurved in the sense of the helix defined by the first side (42, 48).

4. Apparatus according to any one of Claims 1 to 3 characterized in that the leading edge (44) of each vane is straight.

5. Apparatus according to any one of Claims 1 to 3 characterized in that each vane (36) comprises, next to its leading edge (50) a truncated conical extension (54) incurved in the sense of the helix defined by the first side (48), the radius of curvature of said extension increasing towards the cylindrical wall (26).

6. Apparatus according to any one of the preceding Claims characterized in that the trailing edge (46, 52) of each vane is bevelled.

7. Apparatus according to any one of the preceding Claims characterized in that each vane (36, 38) is developable.

8. Apparatus according to any one of the preceding Claims characterized in that it additionally comprises an annular cowl (28) located on an extension of the cylindrical wall (26) on the fluid-exit side, with a cylindrical skirt (30) of greater diameter than the diameter of the wall extending the annular cowl (28), the internal diameter of said latter wall being less than the diameter of the wall (26).

9. Apparatus according to any one of the preceding Claims characterized in that the axis (XX, YY) of the wall (26) is vertical and that the fluid enters from below.

10. Vapour generator comprising an external envelope (12), a first circuit in which circulates a hot primary fluid, and a second circuit in which circulates a secondary fluid, which latter enters the envelope in the liquid phase and leaves in the vapour phase after absorbing a proportion of the heat carried by the primary fluid, the second circuit additionally comprising means for separating liquid and vapour phases of the secondary fluid located near the exit of the envelope, characterized in that the separating means comprises at least one group of two separation apparatus (16, 18) according to any one of the preceding Claims connected in series.

11. Vapour generator according to Claim 10 characterized in that the separation apparatus (16, 18) are according to Claims 8 and 9 taken together, and in that the wall (26) of the second separation apparatus (18) is fixed in fluid-tight manner to the cowl (28) of the first separation apparatus (16).

12. Generator according to Claim 11 characterized in that the second circuit comprises an upper chamber (20) into which opens the second separation apparatus (18), and a chamber (34) into which open the passages defined between the wall (26) of each separation apparatus (16, 18) and the corresponding cylindrical skirt (30), the chambers (34 and 20) being in communication through drying means (24) of low pressure-drop.

13. Generator according to any one of Claims 10 to 12 characterized in that each vane (36) of the first separation apparatus (16) comprises next to its leading edge (50) a truncated conical extension (54) incurved in the sense of the helix defined by the first side (48), the radius of curvature of said extension increasing towards the corresponding cylindrical wall (26), while the leading edge (44) of each vane (38) of the second separation apparatus (18) is straight.

## Patentansprüche

1. Vorrichtung zum Trennen der Flüssig-und Dampfphase eines Fluids, mit einer zylinderförmigen Wand (26), in welcher Flügel (36, 38) angeordnet sind, dadurch gekennzeichnet, daß jeder der Flügel die Form einer dreieckförmigen, gekrümmten Oberfläche (ABC, DEF) aufweist, wobei deren erste, an die Wand (26) anstoßende Seite (42, 48) ein Schraubenlinie festlegt, deren Achse mit der Achse (XX, YY) der Wand zusammenfällt, und die dieser ersten Seite gegenüberliegende Ecke (A, D) im wesentlichen auf der Achse der Wand angeordnet und in dichter Weise mit den entsprechenden Ecken der anderen Flügel verbunden ist, und wobei die zwei anderen Seiten eine im wesentlichen senkrecht zu der Achse (XX, YY) der Wand verlaufende Vorderkante (44, 50) und eine in bezug auf diese Achse geneigte Hinterkante (46, 52) festlegen.

2. Vorrichtung nach Anspruch 1, dadurch gekennzeichnet, daß der Neigungswinkel der Hinterkante (46, 52) in bezug auf die Achse (XX, YY) der Wand zwischen 30° und 60° liegt.

3. Vorrichtung nach irgendeinem der Ansprüch 1 oder 2, dadurch gekennzeichnet, daß die Hinterkante (46, 52) eines jeden Flügels gekrümmt ist und mit der Geraden (AC, DF), welche die entsprechenden Ecken verbindet, eine im Sinn der von der ersten Seite (42, 48) festgelegten Schraubenlinie nach einwärts gekrümmte, zylinderförmige Oberfläche festlegt.

4. Vorrichtung nach irgendeinem der Ansprüche 1 bis 3, dadurch gekennzeichnet, daß die Vorderkante (44) eines jeden Flügels geradlinig ist.

5. Vorrichtung nach irgendeinem der Ansprüche 1 bis 3, dadurch gekennzeichnet, daß jeder Flügel (36) auf der Siete der Vorderkante (50) eine kegelstumpfförmige Verlängerung (54) umfaßt, welche im Sinne der von der ersten Seite (48) festgelegten Schraubenlinie nach einwärts gekrümmt ist, wobei der Krümmungsradius dieser Verlängerung zur zylinderförmigen Wand (26) hin zunimmt.

6. Vorrichtung nach irgendeinem der vorhergehenden Ansprüche, dadurch gekennzeichnet, daß die Hinterkante (46, 42) eines jeden Flügels abgeschrägt ist.

7. Vorrichtung nach irgendeinem der vorhergehenden Ansprüche, dadurch gekennzeichnet, daß jeder Flügel (36, 38) abwickelbar ist.

8. Vorrichtung nach irgendeinem der vorhergehenden Ansprüche, dadurch gekennzeichnet, daß die Vorrichtung ferner eine ringförmige Haube (28), welche in der Verlängerung der zylinderförmigen Wand (26) auf der Seite des Fluidaustrittes angeordnet ist, und eine zylinderförmige Glocke (30) umfaßt, deren Durchmesser größer als der Durchmesser der Wand ist und die die ringförmige Haube (28) verlängert, wobei, der Innendurchmesser der ringförmigen Haube (28) kleiner als der Durchmesser der Wand (26) ist.

9. Vorrichtung nach irgendeinem der vorhergehenden Ansprüche, dadurch gekennzeichnet, daß die Achse (XX, YY) der Wand (26) vertikal verläuft und daß der Fluideintritt von unten stattfindet.

10. Dampfgenerator, mit einem äußeren Gehäuse (12), einem ersten Kreis, in dem ein warmes Primärfluid strömt, und einem zweiten Kreis, in dem ein Sekundärfluid strömt, welches in das Gehäuse im flüssigen Zustand eintritt und dieses im Dampfzustand verläßt, nachdem es einen Teil der von dem Primärfluid transportierten Wärmemenge aufgenommen hat, wobei der zweite Kreis in der Nähe des Ausgangs des Gehäuses angeordnete Mittel zum Trennen der Flüssigkeit- und Dampfphase des Sekundärfluids umfaßt, dadurch gekennzeichnet, daß die Mittel zum Trennen wenigstens eine Gruppe von zwei in Reihe miteinander verbunden Trennvorrichtungen (16, 18) nach irgendeinem der vorhergehenden Ansprüche umfassen.

11. Dampfgenerator nach Anspruch 10, dadurch gekennzeichnet, daß die Trennvorrichtungen (16, 18) gemäß den Ansprüchen 8 und 9 in Kombination ausgebildet sind und daß die Wand (26) der zweiten Trennvorrichtung (18) dicht mit der Haube (28) der ersten Trennvorrichtung (16) verbunden ist.

12. Generator nach Anspruch 11, dadurch gekennzeichnet, daß der zweite Kreis eine obere Kammer (20), in welche die zweite Trennvorrichtung (18) mündet, und eine Kammer (34) umfaßt, in welche die Durchläße, münden, welche, zwischen der Wand (26) einer jeden Trennvorrichtung (16, 18) und der entsprechenden, zylinderförmigen Glocke (30) definiert sind, wobei die Kammern (34 und 20) über Trocknungsmittel (24) mit geringem Druckverlust miteinander in Verbindung stehen.

13. Generator nach irgendeinem der Ansprüche 10 und 12 dadurch gekennzeichnet, daß jeder Flügel (36) der ersten Trennvorrichtung (16) auf der Seite der Vorderkante (50) eine im Sinn der durch die erste Seite (48) definierten Schraubenlinie nach einwärts gekrümmte kegelstumpfförmige Verlängerung (54) umfaßt, wobei der Krümmungsradius dieser Verlängerung in Richtung zu der entsprechenden zylinderförmigen Wand (26) zunimmt, während die Vorderkante (44) eines jeden Flügels (38) der zweiten Trennvorrichtung (18) geradlinig verläuft.

0 032 088

FIG.1

FIG.4

FIG.3

FIG.2